# EUROPEAN PATENT SPECIFICATION

(11) **EP 2 589 832 B1**
(45) Date of publication and mention of the grant of the patent: **25.09.2019**
(21) Application number: 12190369.4
(22) Date of filing: 29.10.2012
(51) Int. Cl.: F16F 1/22

(54) **Deflection protection**
Ablenkschutz
Protection de déflexion

(30) Priority: 01.11.2011 SE 1151019
(43) Date of publication of application: 08.05.2013
(73) Proprietor: Scania CV AB, 151 87 Södertälje (SE)
(72) Inventor: Bruce Johansson, Henrik, SE-151 32 SÖDERTÄLJE (SE)
(74) Representative: Scania CV AB

(56) References cited:
- FR-A- 1 133 712
- FR-A- 1 521 586
- US-A- 1 867 203
- US-A- 3 376 033

## Description

### TECHNICAL FIELD

The invention relates to a deflection protection for a leaf spring, comprising a pair of mutually opposite supports for the spring in a region where the spring is liable to deflection, such that each support comprises a pair of mutually opposite ends and a connection between them for connecting to the spring in the region liable to deflection, and the ends are so located that in a normal state for a deflection of the spring they are at a distance from the spring to serve, in conjunction with the connection, as a bend stop for the spring in a deflection-protection limit state for the deflection of the spring. The invention relates also to a leaf spring for such a deflection protection. The invention relates also to use of such a deflection protection for a leaf spring in a wheel suspension of a motor vehicle, and to a motor vehicle provided with such a deflection protection.

### BACKGROUND

The fact that the ends of the supports of such a deflection protection are at a distance from the leaf spring makes it possible for the latter to perform its function substantially unhindered within its desired range of deflection from the normal state. The sole engagement of the support with the spring may in principle be for example only a line abutment of the connection against the opposite sides of the spring installation. When the deflection reaches the limit state and the bend stop takes effect, the ends and the intermediate connection cooperate to serve along the length of the deflection protection as support points against continued deflection of the spring.

Deflection protections of the kind indicated above are in principle known from patent specifications FR 1133712 A and FR 1521586 A, but are relatively bulky, occupy space and cannot easily be retrofitted, as they are situated in a load-absorbing region of the spring.

The document US 1867203 A relates to a combined spring clip and shock absorber for the springs of motor vehicles which is adapted to replace the usual clip employed for holding the leaves of the spring against relative lateral movements.

### SUMMARY OF THE INVENTION

An object of the present invention is to propose a deflection protection of the kind indicated in the introduction which only insignificantly increases the weight and space requirement of the spring installation and is easy to fit.

This is achieved by the features indicated in the claims set out below.

According to the invention, each support comprises a pair of sidepieces, a pair of crosspieces serving as the mutually opposite ends, and an intermediate crosspiece comprising the connection between the ends, which connection further comprises a pair of threaded connections through the sidepieces to clamp the spring between the two intermediate crosspieces.

Such an "open" support with mutually spaced crosspieces and sidepieces may keep down the weight of the deflection protection. The two threaded connections, each situated at their respective long edge of the leaf spring, make it possible for an existing leaf spring in a wheel suspension of a motor vehicle to be retrofitted with a deflection protection without the spring having to be removed.

A leaf spring for a deflection protection according to the invention may have a reduced thickness in a plane for its deflection in the region liable to deflection. This feature may be allowed by the latent regional stiffening of the spring installation which is provided by the deflection protection. The weight of the installation is thus reduced. The risk of fatigue failure of the installation in and around the region liable to deflection may also be reduced in that the resulting locally thinner installation is then subject to smaller stresses by repeated bending as compared with a thicker installation.

The fact the ends of the support are situated at a distance from the spring installation makes it possible for the installation to perform its function substantially unhindered within its desired range of deflection from the normal state. The sole engagement of the support with the installation may in principle be for example only a line abutment of the connection against the mutually opposite sides of the installation. When the deflection reaches the limit state and the bend stop takes effect, the ends and the intermediate connection cooperate to serve along the length of the deflection protection as support points against continued deflection of the installation. The deflection protection then increases the installation's regional rigidity beyond the deflection protection length.

Other features and advantages of the invention may be indicated by the claims and description of an embodiment example set out below.

### BRIEF DESCRIPTION OF DRAWINGS

FIG. 1 is a perspective view of deflection protection according to the invention applied on a leaf spring;
FIG. 2A and 2B are schematic longitudinal sectional views of a deflection protection approximately according to FIG. 1, showing the leaf spring in respective opposite extreme states; and
FIG. 3A and 3B are simplified side views of a deflection protection approximately according to FIG. 1, applied on a leaf spring of a wheel suspension in a normal state and a deflection protection limit state respectively.

The same reference numbers are used throughout the drawings for items with the same or similar functions.

### DETAILED DESCRIPTION OF EMBODIMENT EXAMPLE

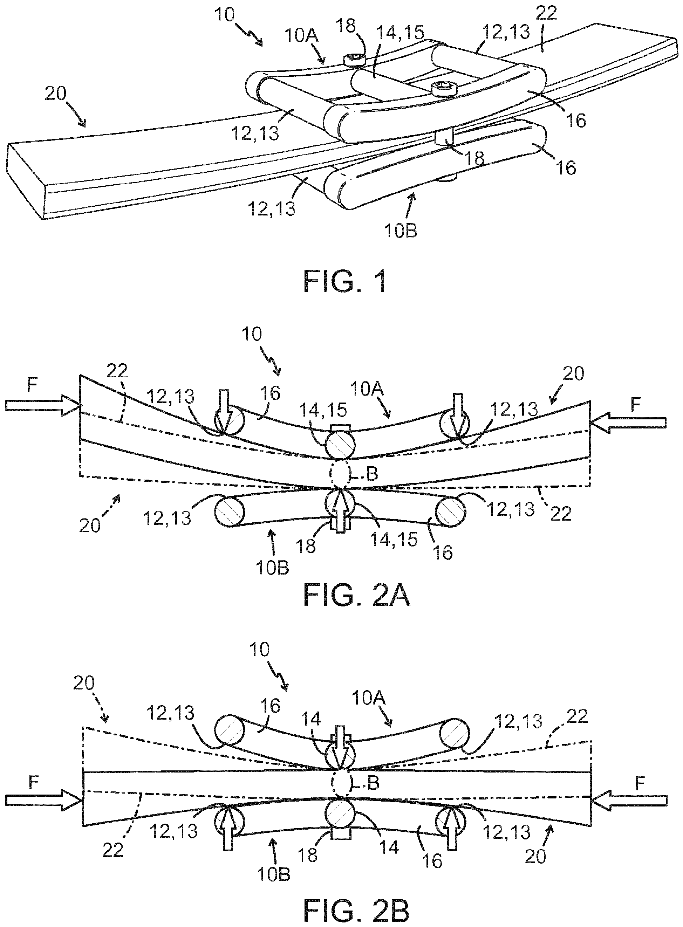

FIG. 1 depicts a double-sided deflection protection 10 connected to a leaf spring 20 by a threaded connection 18 at each of the opposite long edges of the spring. As illustrated most clearly by FIGS. 2A and 2B, each of the two supports 10A and 10B of the deflection protection comprise in this case three mutually spaced crosspieces 12, 14 which have their opposite ends joined by a pair of sidepieces 16. More specifically, the outer crosspieces 12 serve as the ends 13 of each support 10A, 10B, while the two intermediate crosspieces 14 form in conjunction with the threaded connection 18 the connection 15 which serves to clamp the leaf spring 20 between them. The bend stop for the spring thus comprises the intermediate crosspiece 14 of one of the supports 10A/10B in conjunction with the two crosspieces 14 of the other support 10B/10A.

As further illustrated by FIGS. 2A and 2B, the supports 10A and 10B need not be alike. They may for example be shaped differently so that the ends 13 of the one support 10A are at approximately the same distance from an adjoining outside 22 of the leaf spring as the ends 13 of the other support 10B when the spring assumes an already bent normal state (represented by chain-dotted lines in FIGS. 2A and 2B) for its deflection. The spring may then be allowed to deflect equally far in either direction before the deflection protection takes effect.

FIGS. 1, 2A and 2B also illustrate the possibility of the spring installation 20 being of reduced thickness in the region which is liable to deflection.

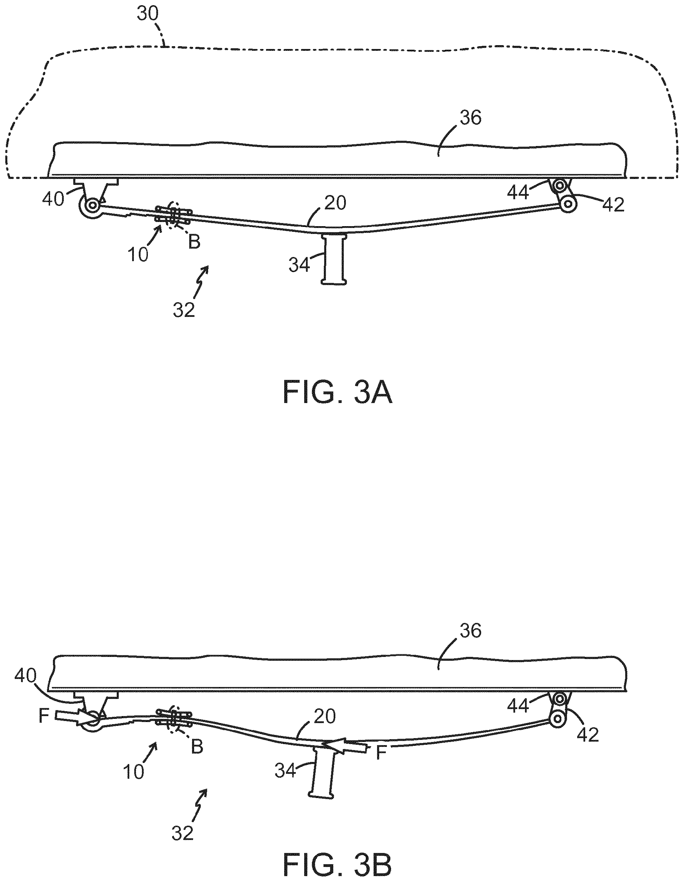

FIG. 3A depicts a deflection protection according to the embodiment in FIG. 1 applied to a region B which is liable to deflection of a leaf spring 20 of a schematically and only partly depicted wheel suspension 32 of a not further depicted motor vehicle 30. This wheel suspension comprises in a conventional way a wheel shaft 34 suspended resiliently relative to a frame member 36 via the leaf spring. The spring's forward end is connected to a forward frame member bracket 40 and its rear end is connected via a link 42 to a rear frame member bracket 44. The spring's middle portion is connected to the wheelshaft 34 in a not further depicted way.

When the vehicle 30 is braked while reversing, e.g. while moving to the right in FIG. 3A, the wheelshaft 34 will move to the left relative to the frame member 36, approximately as depicted in FIG. 3B, with the result that the spring's left portion is subject to a longitudinal compressive force F. A sufficiently great compressive force F may increase the deflection (depending on varying load situations for the spring, the deflection may also occur in a direction opposite to that depicted) of this portion of the spring, with consequent risk of its coming into damaging contact with other vehicle components or being simply cracked in the region B. Before the deflection reaches an undesirable level, however, the deflection protection's bend stop according to the invention intervenes and stiffens the spring along the length of the deflection protection, as described above, so that it can withstand compressive forces which would otherwise deflect the spring too much. In this and other embodiments of the invention, a deflection protection made of steel may be treated by shot peening to increase its strength where necessary.

Many modifications of the deflection protection are possible, e.g. it might in an undepicted way be dimensioned for use on an installation composed of a plurality of elements, e.g. a plurality of leaf springs.

The above description is primarily intended to facilitate comprehension and no unnecessary limitations of the invention are to be inferred from it. The modifications which will be obvious to one skilled in the art from perusing the description may be effected without departing from the concept of the invention or the scope of the claims set out below.

## Claims

1. A deflection protection (10) for a leaf spring (20), comprising a pair of mutually opposite supports (10A, 10B) for the spring in a region (B) where the spring is liable to deflection, such that each support comprises a pair of mutually opposite ends (13) and a connection (15, 18) between them for connecting to the spring in the region (B) which is liable to deflection, which ends are so located that in a normal state for a deflection of the spring they are at a distance from the spring in order to serve in conjunction with the connection (15, 18) as a bend stop for the spring in a deflection protection limit state for the deflection of the spring, **characterised**
**in that** each support (10A, 10B) comprises a pair of sidepieces (16), a pair of crosspieces (12) serving as the mutually opposite ends, and an intermediate crosspiece (14) comprising the connection between the ends, and wherein each pair of crosspieces (12) have their opposite ends joined by a pair of sidepieces (16),
and that the connection further comprises a pair of threaded connections (18) through the sidepieces (16) at each of the leaf spring's long edges to clamp the spring (20) between the two intermediate crosspieces (14).

2. A leaf spring (20) for a deflection protection according to claim 1, **characterised in that** it has a reduced thickness in a plane for its deflection in the region (B) which is liable to deflection.

3. A leaf spring (20) provided with a deflection protection (10) according to claim 1.

4. Use of a deflection protection according to claim 1 for a leaf spring (20) in a wheel suspension (32) of a motor vehicle (30).

5. A motor vehicle (30) with a leaf spring (20) in a wheel suspension (32) provided with a deflection protection according to claim 1.

## Patentansprüche

1. Durchbiegungsschutz (10) für eine Blattfeder (20), umfassend ein Paar einander gegenüberliegender Abstützungen (10A, 10B) für die Feder in einem Bereich (B), in dem die Feder einer Biegung unterworfen ist, derart, dass jede Abstützung ein Paar entgegengesetzter Enden (13) und eine Verbindung (15, 18) zwischen ihnen aufweist zum Kontaktieren der Feder in dem einer Biegung unterworfenen Bereich (B), wobei die Enden so angeordnet sind, dass sie sich in einem Normalzustand einer Biegung der Feder in einem Abstand von der Feder befinden, um zusammen mit der Verbindung (15, 18) als ein Durchbiegungsanschlag für die Feder in einem Durchbiegungsschutzbegrenzungszustand für die Biegung der Feder zu dienen,
**dadurch gekennzeichnet, dass** jede Abstützung (10A, 10B) ein Paar Seitenstücke (16), ein Paar Querstücke (12), die als die einander entgegengesetzten Enden dienen, und ein mittleres Querstück (14) aufweist, welches die Verbindung zwischen den Enden umfasst, und wobei die entgegengesetzten Enden jedes Paars von Querstücken (12) durch ein Paar Seitenstücke (16) verbunden ist,
und dass die Verbindung ferner ein Paar mit einem Gewinde versehener Verbindungen (18) durch die Seitenstücke (16) an jedem der langen Ränder der Blattfeder aufweist, um die Feder (20) zwischen den zwei mittleren Querstücken (14) einzuspannen.

2. Blattfeder (20) für einen Durchbiegungsschutz nach Anspruch 1,
**dadurch gekennzeichnet, dass** sie in einer Ebene ihrer Biegung in dem Bereich (B), der einer Biegung unterworfen ist, eine reduzierte Dicke hat.

3. Blattfeder (20), die mit einem Durchbiegungsschutz (10) nach Anspruch 1 versehen ist.

4. Verwendung eines Durchbiegungsschutzes nach Anspruch 1 für eine Blattfeder (20) in einer Radaufhängung (32) eines Kraftfahrzeugs (30).

5. Kraftfahrzeug (30) mit einer Blattfeder (20) in einer Radaufhängung (32), die mit einem Durchbiegungsschutz nach Anspruch 1 versehen ist.

## Revendications

1. Protection contre la déflexion (10) pour un ressort à lame (20), comprenant une paire de supports mutuellement opposés (10A, 10B) pour le ressort dans une région (B) où le ressort est susceptible de déflexion, de sorte que chaque support comprend une paire d'extrémités mutuellement opposées (13) et une connexion (15, 18) entre elles pour connexion au ressort dans la région (B) qui est susceptible de déflexion, lesdites extrémités étant situées de manière à être à une distance du ressort afin de servir conjointement avec la connexion (15, 18) comme butée de courbure pour le ressort dans une limite de protection de déflexion pour la déflexion du ressort, **caractérisé**
**en ce que** chaque support (10A, 10B) comprend une paire de pièces latérales (16), une paire de traverses (12) servant d'extrémités mutuellement opposées, et une traverse intermédiaire (14) comprenant la connexion entre les extrémités, et dans lequel chaque paire de traverses (12) ont leurs extrémités opposées reliées par une paire de pièces latérales (16),
et **en ce que** la connexion comprend en outre une paire de raccords filetés (18) à travers les pièces latérales (16) sur chacun des bords longs du ressort à lame pour serrer le ressort (20) entre les deux traverses intermédiaires (14).

2. Ressort à lames (20) pour une protection de déflexion selon la revendication 1, **caractérisé en ce qu'**il a une épaisseur réduite dans un plan pour sa déflexion dans la région (B) qui est responsable de la déflexion.

3. Ressort à lames (20) fourni avec une protection de déflexion (10) selon la revendication 1.

4. Utilisation d'une protection de déflexion selon la revendication 1 pour un ressort à lames (20) dans une suspension de roue (32) d'un véhicule à moteur (30).

5. Véhicule à moteur (30) avec ressort à lames (20) dans une suspension de roue (32) fourni avec une protection de déflexion selon la revendication 1.
